# EUROPEAN PATENT APPLICATION

(11) **EP 2 372 533 A1**
(43) Date of publication of application: **05.10.2011**
(21) Application number: 10799423.8
(22) Date of filing: 30.06.2010
(51) Int. Cl.: G06F 9/44, G06Q 10/00

(54) **METHOD AND PLATFORM FOR INTEGRATING A HETEROGENEOUS COLLABORATIVE DESIGN SYSTEM OF WORK GROUP AND PRODUCT LIFECYCLE MANAGEMENT SYSTEM**

(30) Priority: 16.07.2009 CN 200910157918
(71) Applicant: Tangshan Railway Vehicle Co., Ltd, Tangshan, Hebei 063035 (CN)
(72) Inventor: SONG, Yubin, Tangshan Hebei 063035 (CN); WANG, Guangming, Tangshan Hebei 063035 (CN); LIAN, Youli, Tangshan Hebei 063035 (CN); ZHANG, Bo, Tangshan Hebei 063035 (CN); LIU, Qiong, Tangshan Hebei 063035 (CN); QIN, Yanfen, Tangshan Hebei 063035 (CN); WANG, Xue, Tangshan Hebei 063035 (CN); ZHANG, Lisheng, Tangshan Hebei 063035 (CN)
(74) Representative: Pfenning, Meinig & Partner GbR
(86) International application number: PCT/CN2010/074819
(87) International publication number: WO 2011/006425

(57) **Abstract**

The present invention provides a method and a platform of integrating a heterogeneous workgroup collaborative design system and a PLM system, which is suitable for collaborative design of a large complex product, realizes integration of heterogeneous 3D CAD collaborative design system and PDM system, guarantees consistency of parameter and state between 3D CAD data and PDM data, and facilitates automatic circulation of design data from a product R&D platform to a manufacture executing platform. It implements integration of Pro/E-Intralink and SAP-PLM, transmits the product R&D data in the Pro/E-Intralink to the SAP-PLM, creating or changing corresponding material, voucher, and EBOM, realizes review and re-sign of document, associates the data object with the design project PS or change object, and meanwhile automatically transmits back its property and state to the Pro/E-Intralink, thereby realizing automatic circulation of the R&D data from the Pro/E-Intralink to PDM-ERP.

## Description

The present claims priority to China patent application No. 200910157918.6, filed on July 16, 2009, entitled "Method and Platform of Integrating a Heterogeneous Workgroup Collaborative Design System and a PLM System", which is incorporated herein by reference in its entirety.

### FIELD OF THE TECHNOLOGY

The present invention relates to a method and system for automatically circulating design data from a product research and development (R&D) platform to a manufacture execution platform, completely proposes a key interface standard for integrating a heterogeneous workgroup-level product data management system and a PDM system, and implements an interface technology of a workgroup-level product data management system INTRALINK 8.0 and an SAP PDM system according to this standard. The interface technology may assist an engineer to directly provide dynamic product data for an ERP operation in a Pro/E-Intralink collaborative environment. SAP is the abbreviation of "Systems, Application, and Products in Data Processing", means an enterprise management solution; PDM is the abbreviation of "Product Data Management", means a product data management, and ERP is the abbreviation of "Enterprise Resource Planning", means an enterprise resource planning.

### BACKGROUND

With the constant evolution of information management system, fusion of the two fields PDM and ERP has become an inevitable trend. Currently, there are two main trends in the information system market: performing ERP extension on the basis of PDM and performing PDM data management extension on the ERP. That is to say, the difference in the foundations of the two manners determines the sharp different in their development orientations; and it is just their orientations that restrict the seamless fusion of the PDM and the ERP. Whatever orientations take its own part of system as absolutely dominant status, such that their extension function is seriously weakened. However, this situation cannot apparently meet business demands of a large-scale complex product R&D and manufacture enterprise. In order to solve this problem, a new resolving idea is imperative in combination with development and demands of the enterprise itself.

For a large manufacture enterprise which introduces the internationally advanced ERP management software---SAP, it should apply SAP-PLM (product lifecycle management) function in depth to manage the R&D data while relying on the SAP to perform core managements like manufacture execution and cost accounting. However, the SAP, as a strong ERP software, has a simple PDM function; as it can only receive and management result of data but is quite weak in managing the R&D process data, it is quite incompetent in managing remote collaborative design of a large complex product. Although a mainstream three-dimension design software Pro/ENGINEER may provide the PDMLink that completely match therewith (PDMLink is a tool for implementing a full product lifecycle management during the product research and manufacture process) to implement fine management on the R&D process data; however, it is difficult to be close integrated with the ERP again for directly transmitting the R&D data to the manufacture execution system. In view of the above background, a final solution for a three-dimension design process is determined through multi-party demonstration and analysis: Pro/E-Intralink-SAP/PLM. Through seamless matching of the Pro/Engineer and Intralink (providing collective management on the design data, data security service, and document and data search, and enabling a designer to share and manage the data in a concurrent engineering development environment), shared control and collaborative design of the R&D process data is realized, and then the PDM system is formed by integrating the Intralink and the SAP/PLM. As the SAP/PLM itself is a part of the SAP, the integration of PDM and ERP may be effectively avoided, thereby directly realizing the effective delivery from the R&D data to the manufacture execution.

Under the guide of this technical route, an interface program of the Pro/E-Intralink and SAP/PLM is evolved. The expected effect may be successfully realized through this interfacing technology, and a completely new solution is formed. It further provides a set of modem information management system integrating R&D and manufacture management for the large-scale complex product R&D and manufacture enterprise.

### SUMMARY

The technical problem to be solved by the present invention is to realize the integration of a PDM system and an ERP system. Design data in the PDM system are imported into an SAP to generate corresponding materials, a voucher, and a bill of material (BOM); its properties and states are synchronously transmitted back to an Intralink to guarantee consistency between the data states of the products at both sides, thereby providing data source for manufacture operation and subsequent operations of the ERP system, which realizes automatic circulation of the design data from a design platform to a manufacture platform, avoids errors caused by human factors, and improves the efficiency, and data accuracy and consistency.

According to the inventive objective of the present invention, there is provided a method for integrating a heterogeneous workgroup collaborative design system and a PLM system, the method includes the following steps:

Step 1: establishing a function that may export all information of a model in a form of data stream and a function of being called in a certain manner to trigger modification to model state of the server end in the PDM system.

Step 2: after issuing the model properties, blueprint information and model structure information, transmitting them to the ERP format in a certain manner according to a customized format by utilizing the functions in step 1.

Step 3: initiating ERP, reading the model information as transmitted in step 2 by using a source program to a defined corresponding inner table, and determining the standardization of the data.

Step 4: reading corresponding information from the inner table, and transmitting the data source for R&D and design from the PDM system to the ERP system by using the source program.

Step 5: prompting error information and returning the corresponding state and properties back to the PDM system by using the method of modifying model state in step 1, so as to specify whether it is successfully executed and enable the model to enter into the next state in its lifecycle.

According to one inventive objective of the present invention, there is provided a method for integrating a heterogeneous workgroup collaborative design system and a PLM system, and more particularly, a method for automatically circulating design data from a product R&D platform to a manufacture platform to guarantee transmitting back property information and synchronizing states, wherein the method comprises the following steps:

An exporting step, where product data completed in a design platform Pro/E-Intralink are transmitted to an SAP server according to a customized format;

An exporting and relevant processing step, comprising analyzing and customizing exporting format and method of the data according to pre-exported data object, establishing content on a corresponding path, modifying relevant document, and registering customized property document in the system;

A determining step, comprising executing an interface program at an SAP client to read out corresponding data information, and determining standardization of the data;

A determining and relevant processing step, comprising determining creation of materials, voucher, and engineering bill of materials (EBOM) according to whether a particular field has a value, performing corresponding operation after modification and engineering change, and selecting a corresponding work breakdown structure (WBS) element during the creation to be correlated with a ProjectSystems (PS) module;

A transmitting back step, comprising prompting error information and transmitting corresponding state and property synchronously back to the design platform Intralink, so as to specify whether execution is successful and determine operation to be performed in a next step;

A displaying step, comprising terminating the processing, displaying the processing result, and waiting for a next task.

According to a further inventive objective of the present invention, wherein the determining step comprises:

Turning to terminating step after performing the corresponding processing if the data read out contains an error;

Continuing subsequent operation if the data read out is correct.

According to a further inventive objective of the present invention, the design platform thereof provides collective management of design data, data security service, and document and data query, such that designers may share and manage the data in a concurrent engineering development environment.

According to a further inventive objective of the present invention, the transmitting back state and property is implemented by using object-oriented remote method invocation (RMI) of JAVA; during transmitting back step, the client calls a function at the client. Firstly, it analyzes an extensible markup language (XML) document, and then calls a property and state transmitting back method at the server side by using a RMI agency; setting and state modification of server property are implemented by a subclass in the RMI, for the SAP to transmit back the property.

According to a further inventive objective of the present invention, there is provided a platform for integrating a heterogeneous workgroup collaborative design system and a PLM system, and more particularly, a system for automatically circulating design data from a product R&D platform to a manufacture platform to guarantee transmitting back property information and synchronizing states, wherein the system comprises the following means:

Exporting means for transmitting product data completed in a design platform Pro/E-Intralink to an SAP server according to a customized format;

Determining means for executing an interface program at an SAP client to read out corresponding data information, and determining standardization of the data;

Transmitting back means for prompting error information and transmitting corresponding state and property synchronously back to the design platform Intralink, so as to specify whether the execution is successful and determine operation to be performed in a next step;

Displaying means for terminating the processing, displaying the processing result, and waiting for a next task.

According to a further inventive objective of the present invention, in the determining means:

The operation procedure turns to terminating means after executing the corresponding processing if the data read out contains error;

The subsequent operation is continued if the data read out is correct.

According to a further inventive objective of the present invention, the design platform thereof provides collective management of design data, data security service, and document and data query, such that designers may share and manage the data in a concurrent engineering development environment.

According to a further inventive objective of the present invention, the transmitting back state and property is implemented by using a RMI technology of JAVA; during the transmitting back step, the client calls a function at the client. It firstly analyzes an XML document, and then calls a property or state transmitting back method at the server side by using a RMI agency; and setting and state modification of server property are implemented by a subclass in the RMI for the SAP to transmit back the property.

The present invention solves the data delivery problem between the PDM system and the ERP system, which greatly reduces the user's work load, improves the data accuracy, and makes the flow much simpler and more standard.

### BRIEF DESCRIPTION OF THE DRAWINGS

Fig. 1 is a flow chart of the method according to the present invention;

Fig. 2 is a flow chart of a preferred embodiment;

Fig. 3 is property information of a model;

Fig. 4 is information corresponding to material in a SAP system;

Fig. 5 is blueprint information of a model;

Fig. 6 is information corresponding to voucher in a SAP system;

Fig. 7 is structural information of a model;

Fig. 8 is information corresponding to EBOM in a SAP system;

Fig. 9 is a data flow chart during a R&D collaborative process.

### DETAILED DESCRIPTION

The present invention solves the following specific problem: when performing a three-dimension model design, an engineer needs to rely on the PDM system to realize process collaboration; after the design is completed, it needs to be published to the ERP system for performing operation on material requirement planning (MRP). If the engineer manually read the model and structure information thereof and then creates a corresponding material, voucher, and engineering BOM (EBOM) in the ERP system, it will distract much energy from the engineer, make the work troublesome and be susceptible to make a mistake; meanwhile, the flow will become difficult to manage and become disorderly. The data information is automatically subjected to corresponding operations in sequence through this interface, which not only achieves a given objective but also avoids overwhelming manual work.

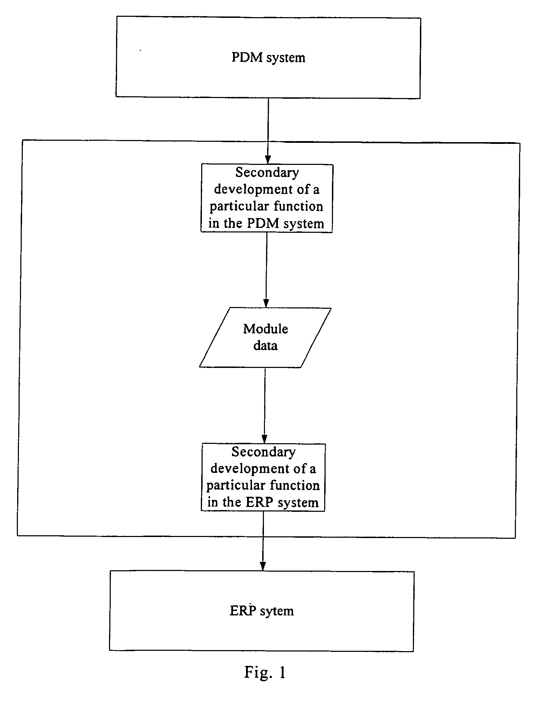

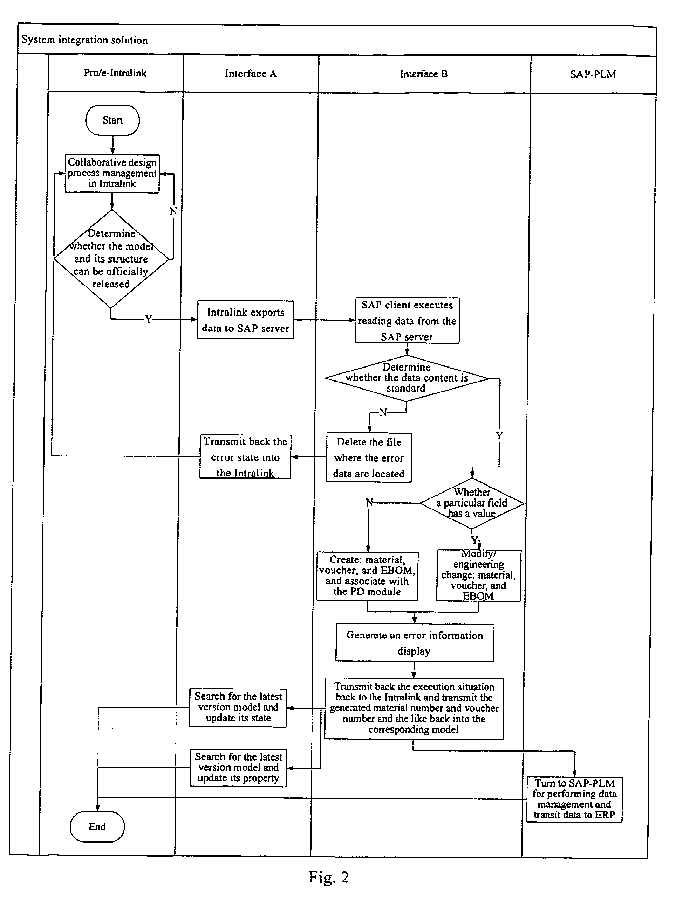

Referring to Fig. 1 and Fig. 2, the method for integrating a heterogeneous workgroup collaborative design system and a PLM system according to the present invention specifically includes the following steps:

Step 1: customizing the format of exported data. A source code is compiled in the PDM system to perform secondary development, and it can realize that all the information of the model may be exported in a data stream manner to a document in a certain format, for example a text document, through the source code; meanwhile, the source code may be called in a certain manner to trigger the function of modifying the model state at the server.

Step 2: establishing a dedicated file on the ERP system server, sharing the file and setting reading and writing rights to the file. Meanwhile, a file transfer protocol (FTP) is established, such that the PDM system exports data in the FTP manner to the ERP system server by utilizing the function in step 1. After completing the three-dimension design and setting its model, the designer performs the exporting operation, triggering this function, and transferring data to the ERP system.

Step 3: executing in the ERP client, reading data to a defined inner table through the source program, and checking the standardization of the data. If they contain error, for example, the value corresponding to the material type that is a compulsory field to fill is empty when creating a material, it will cause failure of material creating; then corresponding process should be performed: 1. transmitting back the error state to the PDM system to enable the designer to have the rights in the PDM system to modify the erroneous model; 2. deleting the erroneous data from the server. After completing the process, the method turns to step 5. In case of no error, the next step continues.

Step 4: reading corresponding information from the inner table, creating or modifying corresponding material, voucher, or EBOM by using the source program. Meanwhile, a window is popped out to select a work breakdown structure (WBS) element to which the current user belongs to associate with a ProjectSystems (PS) module for managing project completeness, so as to realize circulation of data from the PDM system to the ERP system.

Step 5: after processing the data, returning the information on success or not to the user; for example, success or failure of material creating, success or failure of material creating, and success or failure of WBS element associating, etc. Meanwhile, it needs to generate the parameter document required to be transmitted back. The function of modifying the server model state in step 1 is utilized to transmit back this information to the PDM system. For example, if the state is failure, the state of the model in the PDM system is modified to a neutral state such that the designer has the rights to check it out and modify it. Otherwise, in case of success, its state is set to the next state of its corresponding lifecycle.

Specifically, the present invention provides the following preferred embodiments, such that a person skilled in the art may understand the preferred methods therein in more details.

For the manufacture industry, the R&D design data of the product are the source of everything. Without these data, it would be impossible to manufacture. As far as the high-speed EMU train project being designed, designers set up a model structure tree in the Pro/E-Intralink to design the three-dimension model of the product. There are all model information stored in this design platform, for example, Chinese and English manuals, materials, specifications and measurements, weights, and blueprints corresponding to the model, as well as the entire structural relationships between models stored in this design platform. These original data are associated with the SAP system to be applied to manufacturing, purchasing, logistics, and finance, etc. through this interface integrating technology, the first thing to do is: 1) customizing the format of these exported data. On this level, it may be flexible as long as it is convenient for the program to implement. In the Intralink, the secondary development implements the function of exporting all information of the models in a data stream form. The transmitting back function will be illustrated in step 6). 2) The data exported in a certain manner are transmitted to the SAP server. Here, the data are preferably exported to the SAP server in the FTP manner. 3) The specific code program is executed and run at the SAP client, where data are read from the server to a pre-defined - inner table. 4) The data standardization is determined according to a corresponding rule. For example, if the Chinese manual (field that is compulsory to fill) of a model has no value, it would be determined that these data have a problem, and the file of these data in the server would be deleted, and meanwhile the state is transmitted back to the Pro/E-Intralink such that the designer has the rights to re-modify the model. Of course, error information may also be returned such that the designer would know where the error occurs so as to locate the error. 5) The material, voucher, and EBOM are subjected to corresponding operations according to the flow of the program. 6) After the data are processed, the information on success or not is returned to the user. Meanwhile, this information is transmitted back to the Pro/E-Intralink. The transmitting back technology here employs the RMI technology of JAVA. During the transmitting back, the client calls the main 0 method of the ext.rmi.Saprmi class in the client JAR packet, firstly analyses the XML document generated at the SAP client, and then uses the RMI agency to call the property or state transmitting back method of the server.

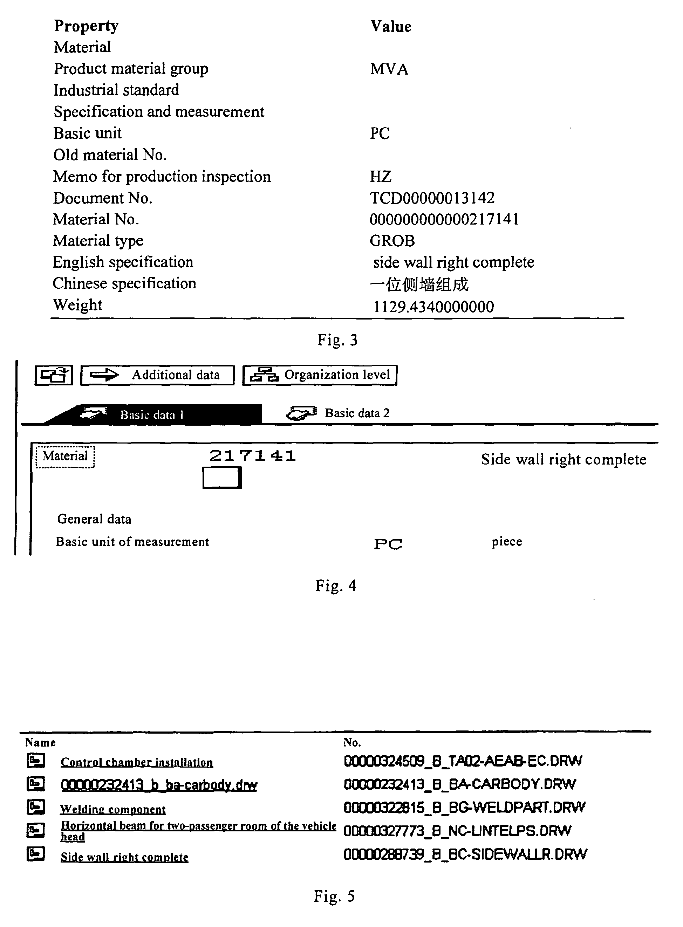

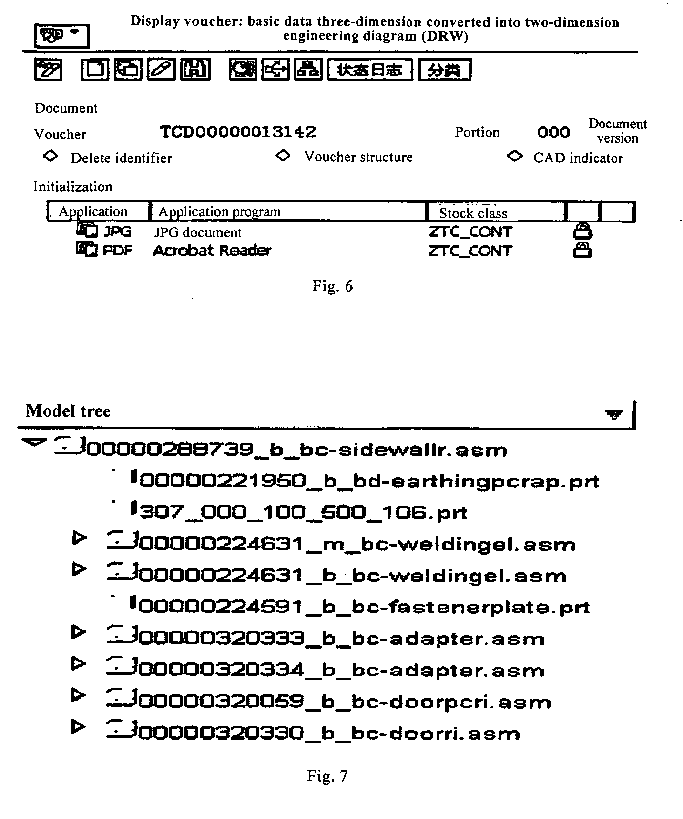

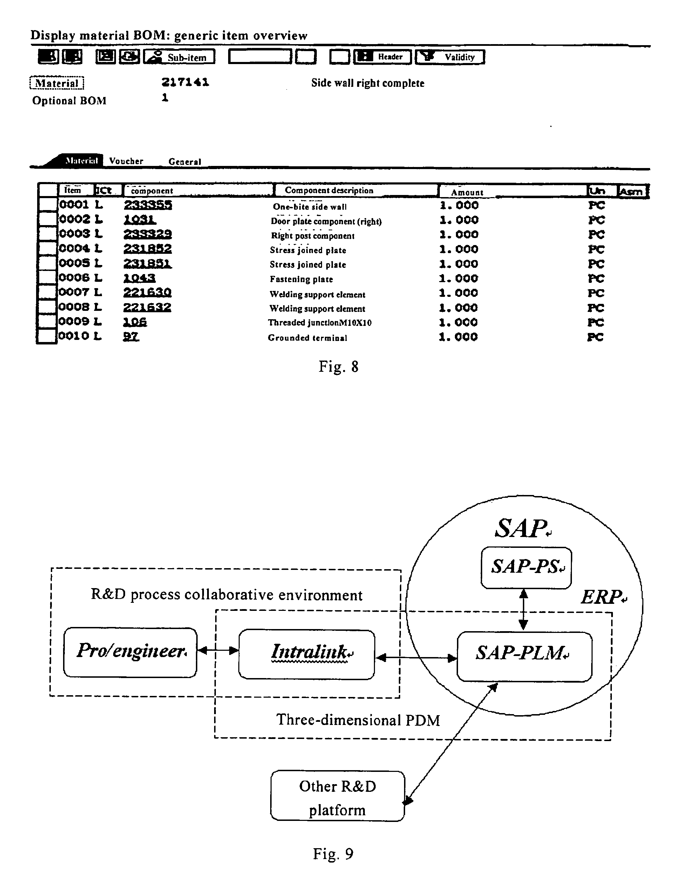

Figs. 3-8 are screen capture images during specific implementation, wherein Fig. 3 is property information of a model; Fig. 4 is information corresponding to material in a SAP system; Fig. 5 is blueprint information of a model; Fig. 6 is information corresponding to voucher in a SAP system; Fig. 7 is structural information of a model; Fig. 8 is information corresponding to EBOM in a SAP system; Fig. 9 is a data flow chart during a R&D collaborative process.

To sum up, based on the PLM idea, digitalized design and concurrent design are enabled through setting up a product R&D platform. The professional level, serial level and standard level of the product will be constantly improved through accumulation; the design quality is also improved; the product design cycle is expected to be reduced about 30%.

This method mainly implements automatic circulation of the design data from the design platform to the manufacture platform, which avoids errors caused by human factor, and improves the efficiency, and data accuracy and consistency. The present invention is not limited to the above embodiments that have been explicitly described.

Although the previous depiction and drawings have described preferred embodiments of the present invention, it would be appreciated that various additions, modifications and replacements may be generated here without departing from the spirit of the present invention. A person skilled in the art is quite clear that the present invention may be implemented in other special form, structure, layout, proportion or by using other elements, materials, and components without departing from the spirit or essential features of the present invention. Those skilled in the art would become aware that the present invention may use the structure, arrangement, proportion, material, and components and many other modifications in actual use, and these modifications, without departing from the principle of the present invention, are particularly suitable for the demands of special environments and operations. Thus, the currently disclosed embodiments should be understood as illustrative in all aspects, and should not be understood as limitation to its protection scope.

## Claims

1. A method for integrating a heterogeneous workgroup collaborative design system and a product lifecycle management (PLM) system, comprising:
an exporting step: transmitting product data completed in a design platform Pro/E-Intralink to a Systems, Application, and Products in Data Processing (SAP) server according to a customized format;
an exporting and relevant processing step: analyzing and customizing exporting format and method of the data according to pre-exported data object, establishing content on a corresponding path, modifying relevant document, and registering customized property document in the system;
a determining step: executing an interface program at an SAP client to read out corresponding data information, and determining standardization of the data;
a determining and relevant processing step: determining creation of materials, voucher, and engineering bill of materials (EBOM) according to whether a particular field has a value, performing corresponding operation after modification and engineering change, and selecting a corresponding work breakdown structure (WBS) element during the creation to be correlated with a ProjectSystems (PS) module;
a transmitting back step: prompting error information and transmitting corresponding state and property synchronously back to the design platform Intralink, so as to specify whether the execution is successful and determine operation to be performed in a next step; and
a displaying step: terminating the processing, displaying the processing result, and waiting for a next task.

2. The method according to claim 1, comprising in the determining step:
turning to terminating step after performing the corresponding processing if the data read out contains an error; and
continuing subsequent operation if the data read out is correct.

3. The method according to claim 1, wherein the design platform provides collective management of design data, data security service, and document and data query, such that designers may share and manage the data in a concurrent engineering development environment.

4. The method according to claim 1, wherein the state and property in the transmitting back step is implemented by using a Remote Method Invocation (RMI) technology of JAVA; during the transmitting back step, the client calls a function at the client, firstly analyzes an extensible markup language (XML) document, and then calls a property or state transmitting back method at the server side by using a RMI agency; and setting and state modification of server property are implemented by a subclass in the RMI for the SAP to transmit back the property.

5. A platform for integrating a heterogeneous workgroup collaborative design system and a product lifecycle management (PLM) system, comprising:
exporting means for transmitting product data completed in a design platform Pro/E-Intralink to a Systems, Application, and Products in Data Processing (SAP) server according to a customized format;
determining means for executing an interface program at an SAP client to read out corresponding data information, and determining standardization of the data;
transmitting back means for prompting error information and transmitting corresponding state and property synchronously back to the design platform Intralink, so as to specify whether the execution is successful and determine operation to be performed in a next step; and
displaying means for terminating the processing, displaying the processing result, and waiting for a next task.

6. The platform according to claim 5, wherein in the determining means:
operation procedure turns to terminating means after executing the corresponding processing if the data read out contains error; and
subsequent operation is continued if the data read out is correct.

7. The platform according to claim 5, wherein the design platform provides collective management of design data, data security service, and document and data query, such that designers may share and manage the data in a concurrent engineering development environment.

8. The platform according to claim 5, wherein the state and property in the transmitting back means is implemented by using a Remote Method Invocation (RMI) technology of JAVA; during the transmitting back step, the client calls a function at the client, firstly analyzes an extensible markup language (XML) document, and then calls a property or state transmitting back method at the server side by using a RMI agency; and setting and state modification of server property are implemented by a subclass in the RMI for the SAP to transmit back the property.
